# EUROPÄISCHE PATENTANMELDUNG

(11) **EP 3 819 597 A1**
(43) Veröffentlichungstag der Anmeldung: **12.05.2021**
(21) Anmeldenummer: 20200926.2
(22) Anmeldetag: 09.10.2020
(51) Int. Cl.: G01D 5/14, F15B 15/28, G01D 11/30

(54) **ABSCHIRMEINHEIT ZUR ABGESCHIRMTEN ANORDNUNG EINES SENSORS, SENSORANORDNUNG MIT EINER DERARTIGEN ABSCHIRMEINHEIT UND BEHÄLTER**

(30) Priorität: 07.11.2019 DE 102019217178
(71) Anmelder: Max Aicher GmbH & Co. KG, 83395 Freilassing (DE)
(72) Erfinder: Finke, Olaf, 01906 Burkau (DE)
(74) Vertreter: Rau, Schneck & Hübner Patentanwälte Rechtsanwälte PartGmbB

(57) **Zusammenfassung**

Eine Abschirmeinheit zur abgeschirmten Anordnung eines Sensors (13) umfasst ein Abschirmelement (15) zur Abschirmung des Sensors (13) und ein mit dem Abschirmelement (15) verbundenes Halteelement (16) zum Halten des Sensors (13).

## Beschreibung

Der Inhalt der deutschen Patentanmeldung DE 10 2019 217 178.8 wird durch Bezugnahme hierin aufgenommen.

Die Erfindung betrifft eine Abschirmeinheit zur abgeschirmten Anordnung eines Sensors, eine Sensoranordnung mit einer derartigen Abschirmeinheit sowie einen Behälter.

DE 10 2012 218 613 A1 offenbart eine Befestigungsanordnung zur Befestigung eines Näherungsschalters an einem Gehäuse.

In einer Presse, insbesondere in einer Müllpresse, werden zu verpressende Güter in einem Behälter, insbesondere einem Pressentrog, verpresst. Die Güter werden mittels eines in Längsrichtung beweglichen Kolbens, einem Schieber, bewegt. Für die Betätigung der Presse ist es wichtig, die Position des Kolbens entlang der Längsachse zu kennen. Dazu kann die Position des Kolbens sensorisch erfasst werden. Es ist bekannt, ein Längen-Messsystem oder Schaltfahnen zu verwenden, die an dem sich bewegenden Kolben angeordnet sind. Bei einem Längen-Messsystem mit Seilen besteht das Risiko, dass die Seile durch mechanische Einwirkung beschädigt und insbesondere zerstört werden. An dem Kolben angeordnete Schaltfahnen können durch mechanische Einwirkung beschädigt und insbesondere zerstört werden.

Alternativ ist eine Erfassung einer Endlagenposition der Kolbenstange, die durch einen Hydraulikzylinder angetrieben wird, möglich. Wenn die Endlagen der Hydraulikzylinder als Anschlag benutzt werden, kann das bei dauerhaftem Betrieb der Presse die Hydraulikzylinder beschädigen und insbesondere zerstören.

Die genannten Messsysteme sind im Inneren des Behälters angeordnet. Deren Montage und Wartung ist kompliziert, weil das Behälterinnere zugänglich sein muss.

Der Erfindung liegt die Aufgabe zugrunde, die Positionsbestimmung in einem Behälter, insbesondere in einem Pressentrog, zu verbessern, so dass insbesondere die Positionsbestimmung zuverlässig erfolgt und insbesondere die Zugänglichkeit eines Sensors verbessert ist.

Diese Aufgabe ist durch eine Abschirmeinheit mit den in Anspruch 1 angegebenen Merkmalen, durch eine Sensoranordnung mit den in Anspruch 7 angegebenen Merkmalen sowie durch einen Behälter mit den in Anspruch 8 angegebenen Merkmalen gelöst.

Der Kern der Erfindung besteht darin, dass eine Abschirmeinheit ein Abschirmelement zur Abschirmung eines Sensors aufweist. Der Sensor ist durch die Abschirmeinheit zuverlässig geschützt beispielsweise vor Biomasse, Hausmüll, Recyclingwerkstoffen, Holz, Kunststoffen, Wasser und unter Druck stehenden Medien, insbesondere unter Druck stehenden Fluiden. Eine Beschädigung und insbesondere eine Zerstörung des Sensors durch Güter in einem Behälter ist verhindert. Die Abschirmeinheit gewährleistet zuverlässig eine abgeschirmte Anordnung, insbesondere eine Befestigung, des Sensors an einem Behälter. Die Abschirmeinheit weist ein Halteelement auf, das zum Halten des Sensors dient. Das Halteelement ist mit dem Abschirmelement verbunden. Insbesondere ist das Halteelement lösbar mit dem Abschirmelement verbunden, insbesondere verschraubt. Als Sensor dient insbesondere ein induktiver Sensor, der eine berührungslose Positionserfassung der Güter, insbesondere von Metallteilen, in dem Behälter ermöglicht. Es sind auch andere Ausführungen für den Sensor möglich. Es ist insbesondere nicht erforderlich, dass der Sensor als Näherungssensor ausgeführt ist. Es ist insbesondere möglich, einen Sensor zu verwenden, der nicht oder nicht nur im Nahbereich, sondern insbesondere im Fernbereich funktioniert. Dadurch, dass der induktive Sensor mit den Metallteilen nicht in Kontakt kommt, ist ein Verschleiß des Sensors, insbesondere dessen Beschädigung oder Zerstörung ausgeschlossen. Dadurch, dass das Halteelement von dem Abschirmelement lösbar ist, ist die Zugänglichkeit zu dem an dem Halteelement gehaltenen Sensor vereinfacht. Ein Öffnen des Behälters, insbesondere eines Pressetrogs, zur Wartung und/oder Reparatur des Sensors ist entbehrlich. Die Handhabung des Sensors, insbesondere dessen Montage an dem Behälter, ist vereinfacht.

Eine Abschirmeinheit gemäß Anspruch 2 vereinfacht die Anordnung des Halteelements. Insbesondere ist die Befestigung des Sensors an dem Halteelement unkompliziert und sicher möglich.

Eine Abschirmeinheit gemäß Anspruch 3 vereinfacht die Befestigung des Sensors am Halteelement. Der Sensor ist insbesondere an einer Aufnahmeöffnung, die insbesondere als Durchgangsöffnung in dem Halteelement ausgeführt ist, angeordnet und zuverlässig gehalten.

Ein Langloch als Aufnahmeöffnung gemäß Anspruch 4 ermöglicht eine veränderliche Positionierung des Sensors am Halteelement.

Eine Abschirmeinheit gemäß Anspruch 5 ermöglicht eine geschützte Anordnung des Sensors, insbesondere mit dem Sensorkopf, innerhalb des Abschirmelements.

Ein Abschirmelement gemäß Anspruch 6 ermöglicht einen visuellen Zugang in das Innere des Behälters. Ein transparentes Material im Sinne der Anmeldung weist einen Transmissionskoeffizienten von Licht in einem Wellenlängenbereich von 300 nm bis 700 nm von mindestens 50 %, insbesondere von mindestens 60 %, insbesondere von mindestens 70 %, insbesondere von mindestens 80 %, insbesondere von mindestens 90 % und insbesondere von mindestens 95 % auf.

Alternativ kann das Material intransparent für Licht in einem sichtbaren Wellenbereich ausgeführt sein. Ein derartiges Material gewährleistet einen Sichtschutz in das Innere des Behälters.

Das Material kann Glas und/oder Kunststoff aufweisen. Insbesondere umfasst das Material elektrisch nicht leitende Kunststoffe, insbesondere Polymere, insbesondere Polycarbonat (PC) und/oder Polytetraflourethylen (PTFE).

Eine Sensoranordnung gemäß Anspruch 7 umfasst die an einem Behälter befestigbare Abschirmeinheit sowie einen Sensor, insbesondere einen induktiven Sensor. Die Vorteile der Sensoranordnung entsprechen im Wesentlichen den Vorteilen der Abschirmeinheit, worauf hier mit verwiesen wird.

Ein Behälter gemäß Anspruch 8 weist eine Abschirmeinheit und/oder Sensoranordnung auf und ermöglicht eine zuverlässige und berührungslose Positionserfassung von Metallteilen in dem Behälter.

Ein Behälter gemäß Anspruch 9 ermöglicht eine vorteilhafte Anbringung eines oder mehrerer Sensoranordnungen. Insbesondere ist es nicht erforderlich, dass die Kontur des Abschirmelements, insbesondere eines Bodenabschnitts des Abschirmelements, mit der Öffnung der Seitenwand korrespondiert. Insbesondere kann das Abschirmelement, insbesondere der Bodenabschnitt, kleiner sein als die Innenkontur der Öffnung. Das Abschirmelement ermöglicht eine flexible, von der Öffnung des Behälters unabhängige, Anbringung der Abschirmeinheit. Es ist insbesondere nicht erforderlich, die Abschirmeinheit passgenau an die Öffnung des Behälters anzupassen. Die Anbringung der Sensoranordnung ist unkompliziert möglich.

Insbesondere sind entlang der Längsachse des Behälters mehrere Sensoranordnungen im Abstand zu einander angeordnet. Dadurch ist eine Positionserfassung der Metallteile, insbesondere des Kolbens in dem Behälter mit verbesserter Ortsauflösung möglich. Es ist auch möglich, die Sensoranordnungen entlang des äußeren Umfangs an dem Behälter anzuordnen, insbesondere in einer Ebene senkrecht zur Längsachse des Behälters. Dadurch kann die Positionserfassung redundant erfolgen. Die redundante Positionserfassung ermöglicht das Erkennen und Löschen von Messfehlern. Es ist auch möglich mehrere Sensoranordnungen sowohl entlang des äußeren Umfangs als auch beabstandet zueinander entlang der Längsachse vorzusehen.

Ein Behälter gemäß Anspruch 10 gewährleistet, dass Metallteile aus dem Behälter nicht unbeabsichtigt austreten.

Ein Behälter gemäß Anspruch 11 gewährleistet eine zuverlässige Anordnung des Abschirmelements an dem Behälter.

Es ist alternativ möglich, das Abschirmelement an dem Behälter lösbar anzubringen, insbesondere das Abschirmelement an dem Behälter anzuschrauben. Dazu dienen eine oder mehrere Schraubverbindungen. Die Befestigung des Abschirmelements an dem Behälter ist unkompliziert.

Ein Behälter gemäß Anspruch 12 ermöglicht einen störungsfreien Betrieb der Presse. Dadurch, dass die Abschirmeinheit oberflächenbündig an einer Innenfläche des Behälters angeordnet ist, sind in den Behälter vorstehende Teile und/oder Rücksprünge an der Innenfläche des Behälters verhindert. An Rücksprüngen können sich die zu verpressenden Güter verkanten und zu einer Beschädigung des Kolbens und/oder der Behälterseitenwand führen.

Sowohl die in den Patentansprüchen angegebenen Merkmale als auch die in der nachfolgenden Ausführungsform der erfindungsgemäßen Abschirmeinheit angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Zusätzliche Merkmale, Einzelheiten und Vorteile der Erfindung werden nachfolgend anhand der Beschreibung eines Ausführungsbeispiels gemäß der Zeichnung näher erläutert. In dieser zeigen:
- Fig. 1: eine schematische Seitenansicht eines Behälters mit mehreren Sensoranordnungen,
- Fig. 2: eine vergrößerte Ausschnittsansicht einer Sensoranordnung mit einer erfindungsgemäßen Abschirmeinheit an dem Behälter gemäß Fig. 1,
- Fig. 3: eine Schnittdarstellung gemäß Schnittlinie III - III in Fig. 2.

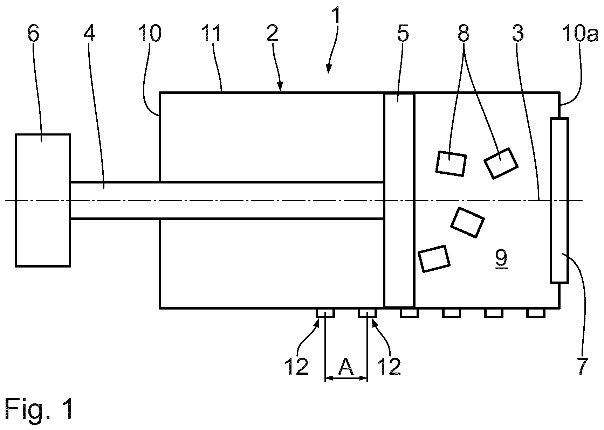

Eine in Fig. 1 dargestellte Presse 1 ist eine Müllpresse. Die Presse 1 umfasst einen Behälter 2, der als Stahlbehälter ausgeführt ist. Der Behälter 2 wird als Pressentrog bezeichnet. Wesentlich ist, dass der Behälter 2 aus einem magnetischen Material, insbesondere aus einem magnetischen Metall, insbesondere Stahl, ausgeführt ist.

Der Behälter 2 ist im Wesentlichen zylindrisch ausgeführt und weist eine Längsachse 3 auf. Der Behälter 2 kann auch eine andere Grundform, insbesondere eine andere Kontur in einer Ebene senkrecht zur Längsachse 3 aufweisen. Beispielsweise kann der Behälter eine rechteckförmige oder quadratische Kontur aufweisen. Wesentlich ist, dass die Kontur entlang der Längsachse 3 konstant ist. An einer Stirnseite 10 des Behälters 2 ist eine Kolbenstange 4 aus dem Behälter 2 herausgeführt. An dem im Behälter 2 angeordneten Ende der Kolbenstange 4 ist ein Kolben 5 befestigt. Der Kolben 5 weist eine Außenkontur auf, die mit der Innenkontur des Behälters 2 korrespondiert. Der Kolben 5 wird auch als Schieber bezeichnet. Die Kolbenstange 4 und der Kolben 5 sind entlang der Längsachse 3 in dem Behälter 2 verlagerbar. Der Kolben 5 weist ein magnetisches Metall, insbesondere Stahl auf.

Die Kolbenstange 4 und der Kolben 5 sind mittels eines Kolbenantriebs 6, insbesondere eines linearen Antriebs, antreibbar. Der Kolbenantrieb 6 ist insbesondere ein Hydraulikantrieb, insbesondere ein Hydraulikzylinder. Insbesondere ist die Kolbenstange 4 einteilig mit dem Hydraulikzylinder verbunden.

An einer der Stirnseite 10 gegenüberliegenden Stirnseite 10a weist der Behälter 2 eine Stirnseitenöffnung 7 auf, durch die Güter 8 aus dem Innenraum 9 des Behälters 2 abgegeben werden können. Insbesondere ist an der Stirnseitenöffnung 7 eine nicht dargestellte Verschlussklappe angeordnet. Zum Verbinden der Presse 1 mit einem Aufnahmebehälter, insbesondere einem Container, kann die Verschlussklappe abgenommen und/oder geöffnet und der Container an den Behälter 2 angedockt werden. Die Güter 8 sind insbesondere Müll, der in der Presse 1 verpresst werden soll.

Die Stirnseiten 10, 10a des Behälters 2 sind durch eine zylindrische Mantelwand 11 des Behälters 2 miteinander verbunden. Der Behälter 2 ist geschlossen.

An der Seitenwand 11 sind mehrere Sensoranordnungen 12 angeordnet. Die Sensoranordnungen 12 sind entlang der Längsachse 3 beabstandet zueinander angeordnet. Ein axialer Abstand A zwischen zwei benachbarten Sensoranordnungen 12 ist insbesondere konstant. Es ist möglich, die Sensoranordnungen 12 entlang der Längsachse 3 mit veränderlichen Abständen A anzuordnen. Insbesondere kann der Abstand A im Bereich der Stirnseitenöffnung 7 abnehmen. Je geringer der Abstand A ist, desto größer ist die Ortsauflösung bei der Positionserfassung des Kolbens 5.

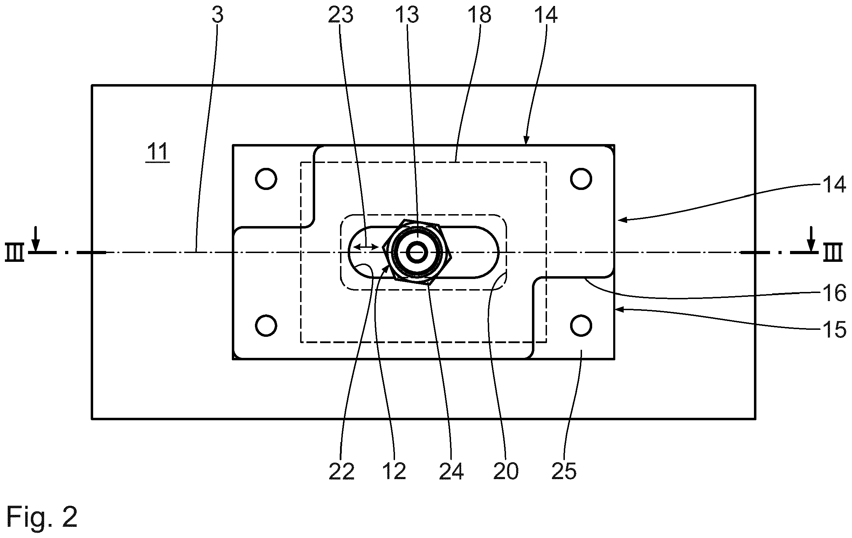

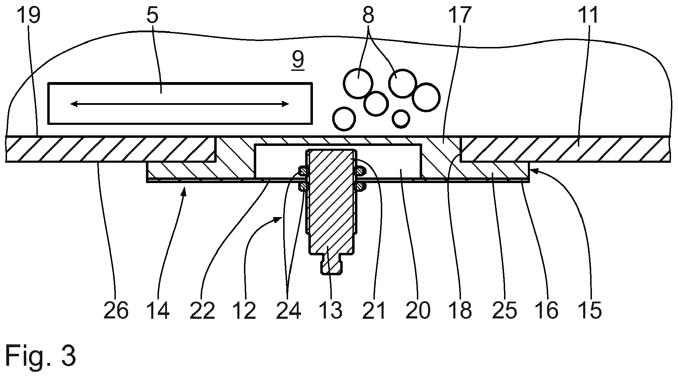

Im Folgenden wird anhand von Fig. 2 und 3 die Sensoranordnung 12 näher erläutert. Die Sensoranordnung 12 umfasst einen induktiven Sensor 13 und eine Abschirmeinheit 14.

Die Abschirmeinheit 14 weist ein Abschirmelement 15 und ein mit dem Abschirmelement 15 lösbar verbundenes Halteelement 16 auf. Das Abschirmelement 15 ist aus einem transparenten Kunststoff hergestellt. Das Abschirmelement 15 ist im Wesentlichen topfförmig ausgeführt mit einem Bodenabschnitt 17, der in einer Öffnung 18 der Seitenwand 11 angeordnet ist. Das Abschirmelement 15 ist derart in der Öffnung 18 angeordnet, dass die Abschirmeinheit 14, und insbesondere das Abschirmelement 15, oberflächenbündig an einer Innenfläche 19 der Seitenwand 11 angeordnet ist.

Der Bodenabschnitt 17 bildet eine zum Innenraum 9 des Behälters 2 hin gerichtete geschlossene Fläche auf. An der Innenfläche 19 des Behälters 2 ist durch die in die Öffnung 18 eingesetzte Sensoranordnung 12 eine durchgängige, kantenfreie Oberfläche gebildet.

Das Abschirmelement 15 weist eine Ausnehmung 20 auf, in der der Sensor 13 zumindest teilweise angeordnet ist. Insbesondere ist der Sensor 13 mit dem Sensorkopf 21 in der Ausnehmung 20 angeordnet. Der Sensorkopf 21 ist dem Innenraum 9 des Behälters 2 zugewandt. Durch die an Ordnung des Sensors 13 ist eine zuverlässige Positionserfassung des Kolbens 5 gewährleistet. Dadurch, dass der Sensor 13, insbesondere der Sensorkopf 21, durch das Abschirmelement 15, insbesondere den Bodenabschnitt 17, abgeschirmt ist, ist eine Beschädigung des Sensors 13 ausgeschlossen.

Das Abschirmelement 15 ist fest und insbesondere unlösbar an der Seitenwand 11 des Behälters 2 angebracht. Unlösbar bedeutet, dass die Abschirmeinheit 14, insbesondere das Abschirmelement 15, nicht zerstörungsfrei von dem Behälter 2 gelöst werden kann. Insbesondere ist das Abschirmelement 15umfangseitig mit dem Bodenabschnitt 17 in der Öffnung 18 und/oder mit einem überstehenden Außenbund 25 an einer Außenseite 26 der Seitenwand 11 verklebt. Alternativ oder zusätzlich kann das Abschirmelement an der Seitenwand des Behälters angenietet oder verschweißt sein.

Das Abschirmelement 15 kann auch lösbar an der Seitenwand 11 des Behälters 2 befestigt sein. Beispielsweise kann das Abschirmelement 15 an der Seitenwand 11 angeschraubt sein. Dazu können Schweißbolzen an der Seitenwand 11 des Behälters 2 angeschweißt sein, wobei das Abschirmelement 15 mit Durchgangsöffnungen auf die angeschweißten Schweißbolzen aufgesteckt und mit Haltemuttern, die auf die Schweißbolzen aufgeschraubt werden, gehalten wird. Es ist auch denkbar, dass das Abschirmelement 15 mit separaten Halteelementen aufgeklemmt und befestigt wird.

Bei einer Ausführung, bei der das Abschirmelement 15 lösbar an der Seitenwand 11 befestigt ist, ist es vorteilhaft, mindestens ein nicht dargestelltes Dichtungselement vorzusehen, um die Grenzfläche zwischen dem Abdichtelement 15 und der Öffnung 18 zuverlässig abzudichten, insbesondere gegen den unbeabsichtigten Austritt von Fluiden aus dem Behälter 2.

Das Halteelement 16, das gemäß dem gezeigten Ausführungsbeispiel als Halteplatte ausgeführt ist, ist mit dem Abschirmelement 15 verschraubt. Die hierfür erforderlichen Befestigungsschrauben sind aus Darstellungsgründen nicht dargestellt. Wesentlich ist, dass das Halteelement 16 von dem Absperrelement 15 unaufwendig gelöst werden kann.

Das Halteelement 16 weist eine Aufnahmeöffnung 22 in Form eines Langlochs auf. Das Langloch weist eine Haupterstreckungsrichtung 23 auf, die parallel zur Längsachse 3 des Behälters 2 orientiert ist. Der Sensor 13 kann in dem Langloch entlang der Haupterstreckungsrichtung 23 veränderlich angeordnet werden. Dadurch ist eine Feinpositionierung des Sensors 13 relativ zu dem Behälter 2 möglich. Der Abstand A zwischen zwei benachbarten Sensoren 13 kann sehr genau, insbesondere kontinuierlich, festgelegt werden.

Der Sensor 13 ist mittels zweier Haltemuttern 24 in der Aufnahmeöffnung 22 fixierbar. Dazu weist der Sensor 13 ein Außengewinde, insbesondere ein metrisches Außengewinde auf, das mit einem Innengewinde der Haltemuttern 24 korrespondiert.

Der Sensor 13 ist an der Halteplatte 16 befestigt. Eine unmittelbare Verbindung des Sensors 13 mit dem Abschirmelement 15 besteht nicht. Insbesondere berührt der Sensor 13 das Absperrelement 15 nicht. Insbesondere ist der Sensor 13 beabstandet von dem Abschirmelement 15 angeordnet.

Bei einer Wartung und/oder Reparatur des Sensors 13 kann dieser durch Lösen des Halteelements 16 von dem Abschirmelement 15 unmittelbar und unkompliziert abgenommen werden. Das Abschirmelement 15 verbleibt in der Öffnung 18 der Seitenwand 11. Die Öffnung 18 bleibt durch das Abschirmelement 15 zuverlässig geschlossen. Eine Reparatur und/oder Wartung des Sensors 13 ist insbesondere im laufenden Betrieb der Presse 1 möglich. Die Stillstandzeiten der Presse 1 sind verkürzt. Eine derartige Presse 1 ist mit hoher Auslastung, und damit besonders wirtschaftlich zu betreiben.

Die Sensoranordnungen 12 können an dem Behälter 2, insbesondere an dessen Seitenwand 11, entlang des Umfangs der Seitenwand 11 an verschiedenen Positionen angebracht sein. Insbesondere können jeweils zwei Sensoranordnungen 12 bezüglich der Längsachse 3 diametral gegenüberliegend an der Seitenwand 11 angeordnet sein.

Dadurch, dass die Abschirmeinheit 14, insbesondere das Abschirmelement 15, abgedichtet in der Öffnung 18 angeordnet ist, ist ein unbeabsichtigtes Austreten der Güter 8 aus dem Innenraum 9 des Behälters 2 zuverlässig ausgeschlossen.

## Patentansprüche

1. Abschirmeinheit zur abgeschirmten Anordnung eines Sensors (13) umfassend
a. ein Abschirmelement (15) zur Abschirmung des Sensors (13),
b. ein mit dem Abschirmelement (15) verbundenes Halteelement (16) zum Halten des Sensors (13).

2. Abschirmeinheit gemäß Anspruch 1, **dadurch gekennzeichnet, dass** das Halteelement (16) als Halteplatte ausgeführt ist.

3. Abschirmeinheit gemäß einem der vorstehenden Ansprüche, **dadurch gekennzeichnet, dass** das Halteelement (16) eine Aufnahmeöffnung (22) aufweist, an der der Sensor (13) befestigbar ist.

4. Abschirmeinheit gemäß Anspruch 3, **dadurch gekennzeichnet, dass** die Aufnahmeöffnung (22) als Langloch ausgeführt ist.

5. Abschirmeinheit gemäß einem der vorstehenden Ansprüche, **dadurch gekennzeichnet, dass** das Abschirmelement (15) eine Ausnehmung (20) zur zumindest teilweisen Aufnahme des Sensors (13) aufweist.

6. Abschirmeinheit gemäß einem der vorstehenden Ansprüche, **dadurch gekennzeichnet, dass** das Abschirmelement (15) ein transparentes Material, insbesondere Glas und/oder Kunststoff, aufweist.

7. Sensoranordnung mit mindestens einer an einem Behälter (2) befestigbaren Abschirmeinheit (14) gemäß einem der vorstehenden Ansprüche und mit einem von der mindestens einen Abschirmeinheit (14) abgeschirmten Sensor (13).

8. Behälter mit einer Abschirmeinheit (14) gemäß einem Ansprüche 1 bis 6 und /oder mit einer Sensoranordnung gemäß Anspruch 7.

9. Behälter gemäß Anspruch 8, **dadurch gekennzeichnet, dass** die Abschirmeinheit (14) in einer Öffnung (18) des Behälters (2), insbesondere an einer Seitenwand (11), angeordnet ist.

10. Behälter gemäß Anspruch 9, **dadurch gekennzeichnet, dass** die Abschirmeinheit (14), insbesondere das Abschirmelement (15), abgedichtet in der Öffnung (18) angeordnet ist.

11. Behälter gemäß einem der Ansprüche 8 bis 10, **dadurch gekennzeichnet, dass** das Abschirmelement (15) fest, insbesondere unlösbar, an dem Behälter (2) angebracht ist.

12. Behälter gemäß einem der Ansprüche 8 bis 11, **dadurch gekennzeichnet, dass** die Abschirmeinheit (14) oberflächenbündig an einer Innenfläche (19) des Behälters (2), insbesondere an einer Seitenwand (11), angeordnet ist.
